# FASCICULE DE BREVET EUROPEEN

(11) **EP 2 001 593 B1**
(45) Date de publication et mention de la délivrance du brevet: **27.12.2017**
(21) Numéro de dépôt: 07731758.4
(22) Date de dépôt: 19.03.2007
(51) Int. Cl.: B02B 1/00, B02B 1/04, B02B 3/00

(54) **DEPELLICULAGE DES GRAINS DE BLE PAR L'OZONE**
VERFAHREN ZUM SCHÄLEN MIT OZON VON WEIZENKÖRNERN
DEHULLING WHEAT GRAINS USING OZONE

(30) Priorité: 20.03.2006 FR 0650952
(43) Date de publication de la demande: 17.12.2008
(73) Titulaire: Green Technologies Sarl, 35400 Saint Malo (FR)
(72) Inventeur: COSTE, Christian, 84870 Loriol-du-Comtat (FR); DUBOIS, Michel, 78530 Buc (FR); PERNOT, Anne-Gaëlle, 35520 La Chapelle-des-Fougeretz (FR)
(74) Mandataire: Le Guen-Maillet
(86) Numéro de dépôt international: PCT/FR2007/050942
(87) Numéro de publication internationale: WO 2007/107665

(56) Documents cités:
- WO-A-2004/028695
- GB-A- 1 113 246
- US-A- 5 845 564
- US-A1- 2003 037 684
- US-A1- 2005 025 868

## Description

### Domaine de l'invention

La présente invention se rapporte à un procédé de dépelliculage du grain de blé ainsi qu'aux produits obtenus par ledit procédé, à savoir les grains de blés dépelliculés et des pellicules qui en ont été séparées. Elle concerne également une installation spécifique pour la mise en oeuvre de ce procédé.

L'invention trouve notamment application dans le domaine de la meunerie industrielle et la meunerie spécialisée. Il est à noter que la mise à disposition de compositions obtenues à partir de grains de blé de manière finement contrôlée, comme le permet la présente invention, est d'un grand intérêt dans le domaine de la diététique. Des compositions de ce type peuvent aussi trouver application dans les domaines de la cosmétique, de la pharmacie et de la chimie fine.

Le blé est une plante supérieure angiosperme, c'est à dire que la graine n'est pas nue et qu'elle est protégée par des téguments. L'embryon de blé ne possède qu'un seul cotylédon, le blé est donc une monocotylédone. Le blé tendre appartient au genre *Triticum* de la famille des *Gramineae.* C'est une céréale dont le grain est un fruit sec et indéhiscent, appelé caryopse, constitué d'une graine centrale et de téguments externes.

La graine centrale est constituée d'un embryon et d'un albumen amylacé à partir duquel est produite la farine, par broyages, tris successifs et tamisages. Au niveau technologique et applications agroalimentaires, on distingue deux principales espèces, le blé tendre et le blé dur. C'est à partir du blé tendre que sont produites les farines destinées en majeure partie à la panification, et à partir du blé dur que sont produites les semoules destinées à la fabrication de pâtes alimentaires.

Les téguments externes sont composés de 6 tissus disposés en couches successives, soit de l'extérieur vers l'intérieur du grain :
- L'épiderme et l'hypoderme qui forment le péricarpe externe ;
- Le mésocarpe et l'endocarpe qui forme le péricarpe interne ;
- La testa et la bande hyaline qui assurent la jonction avec la couche aleurone (la bande hyaline est très fine ou quasi absente dans le blé dur).

Ces deux derniers tissus sont très étroitement liés à la couche à aleurone, laquelle fait partie de l'albumen amylacé. Cette liaison étroite est ce qui définit un caryopse.

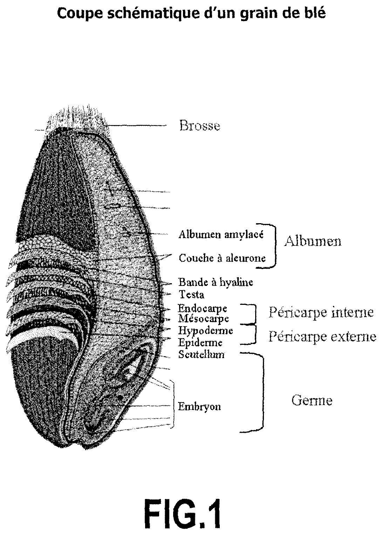

La coupe schématique d'un grain de blé tendre est donnée par la Figure 1.

L'extraction de la farine du grain de blé, opération appelée communément « mouture », est une opération classique du procédé meunier. C'est la structure propre du grain de blé qui a fait adopter ce type de procédé.

En effet, comparativement à d'autres céréales (maïs et riz, par exemple), le grain de blé possède un sillon résultant d'une invagination des téguments vers l'intérieur du grain, sur toute sa longueur et du côté du germe. Les faisceaux nourriciers de la graine au cours de son développement sont localisés au fond de ce sillon. Sa présence détermine la manière dont s'opère la séparation de l'albumen et des enveloppes pour extraire les farines. La présence de ce sillon central rend en effet impossible l'élimination progressive des téguments par abrasion des parties périphériques, comme en rizerie par exemple. L'extraction des farines nécessite de fragmenter préalablement les grains, puis d'isoler progressivement les fractions d'albumen à partir des zones les plus internes du grain, c'est à dire du centre vers la périphérie. C'est la raison pour laquelle les premières farines obtenues, en provenance du centre du grain, sont les plus pures.

Le procédé meunier classique, par broyages, tris et tamisages successifs, permet de séparer les parties périphériques de l'albumen amylacé, lequel donne la farine. La séparation entre les couches externes de l'albumen amylacé et les couches internes des téguments périphériques est une opération délicate, très dépendante des spécificités variétales, et qui, dans tous les cas, est imparfaite.

La farine de blé tendre est obtenue à partir du broyage de la partie centrale du grain appelée « amande ». La farine constitue donc le produit noble issu du grain de blé. Les parties périphériques du grain de blé, séparées de l'amande lors de la mouture, constituent les sous produits. Parmi ces sous-produits le « son », le résidu de la mouture des blés, représente de l'ordre de 10%. Le son est réputé être uniquement constitué de parties périphériques externes, mais contient toujours un peu de granules d'amidon en provenance de l'albumen. L'autre fraction est un mélange très fin de parties périphériques et de parties fines de l'amande, communément appelée « remoulages ». Cette fraction finale de mouture est un mélange intime de parties fines périphériques et de parties fines de l'albumen amylacé.

La semoulerie, qui traite le blé dur, diffère essentiellement par la sélection des semoules provenant des premiers broyages.

Le grain est principalement constitué d'amidon (environ 70%), de protéines (10 à 15% selon les variétés et les conditions de culture), de pentosanes (8 à 10%), de lipides (1,5% environ) et d'autres composants quantitativement mineurs tels que la lignine, la cellulose, les sucres libres, les minéraux et les vitamines.

Ces constituants se répartissent de manière inégale au sein des différentes fractions histologiques du grain. L'amidon se retrouve en totalité dans l'albumen amylacé, les teneurs en protéines du germe et de la couche à aleurone sont particulièrement élevées, les matières minérales abondent dans la couche à aleurone, les pentosanes sont les molécules les plus importantes des parois des cellules de cette dernière. La cellulose et la lignine représentent près de 50% des constituants du péricarpe. Les lipides voisinent ou dépassent les 10% dans le germe et dans la couche à aleurone.

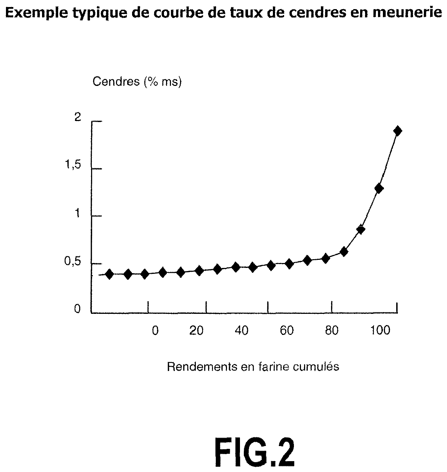

Les parties périphériques de la graine sont les plus riches en matières minérales (environ 2,8%). A l'inverse, l'albumen amylacé n'en contient qu'environ 0,5%, et même moins au coeur du grain. Ceci a pour conséquence que la teneur en matières minérales d'une farine est utilisée comme critère de pureté, c'est-à-dire de son absence de contamination par les parties périphériques du grain, les types légaux de farine reposant dans la plupart des pays sur cette teneur. Les « courbes de cendres » (cf. Figure 2) sont utilisées par les meuniers pour suivre le bon réglage de leur moulin.

Ceci s'entend bien entendu pour l'obtention de farines dites blanches dont la valeur nutritionnelle est de plus en plus remise en question.

Les parties périphériques externes sont reconnues riches en sels minéraux, en vitamines, en fibres solubles et insolubles. Pour satisfaire aux nouvelles exigences en matière de nutrition, il faudrait que les farines contiennent un certain pourcentage de ces parties externes du grain de blé pour apporter à nos organismes, les sels minéraux, les vitamines, les fibres, nécessaires au bon équilibre nutritionnel.

On peut distinguer deux zones particulières dans les parties périphériques externes du grain de blé, qui se retrouvent généralement dans le son :
- les parties les plus externes (péricarpe externe et interne), les plus riches en fibre (lignine, cellulose, hémicellulose) ; et
- les parties les plus internes, qui comprennent la couche à aleurone, plus riches en vitamines, en protéines, et en pentosanes (ou hémicellulose).

Les procédés meuniers actuellement utilisés ne permettent pas d'assurer une différenciation et une séparation entre ces différentes couches, ce qui implique que si l'on veut obtenir des farines plus riches en parties périphériques, il faut réintroduire dans ces farines blanches une partie de son et/ou de remoulages sans aucune distinction possible.

De ce qui précède, on comprend l'intérêt de pouvoir maîtriser la séparation des couches successives du grain de blé, afin de parvenir à des farines de composition (bio)chimique constante et modulable.

Il est également d'un grand intérêt de pouvoir fournir des grains de blé entiers non endommagés dépossédés d'un nombre contrôlé de couches supérieures. Il existe aujourd'hui dans l'industrie agro-alimentaire différentes applications, ou demandes d'applications, de grains de blé entiers, non endommagés, débarrassés d'un nombre contrôlé de couches supérieures (périphériques). Parmi ces applications, on peut citer :
- les blé précuits et utilisables sous forme de légumes,
- les blés précuits utilisables en mélange dans des mixes, ou pour la préparation de sauces spécifiques,
- les blés éclatés pour le petit déjeuner,
- les grains de blé d'addition dans certaines préparations boulangères contenant des grains entiers,
- toute préparation culinaire industrielle contenant des grains entiers,
- toute préparation laitière contenant des grains entiers ou des fractions de grains entiers.

Les pellicules de grains de blé trouvent aussi application dans le domaine agro-alimentaire au vu de l'intérêt des fibres en ce qui concerne le transit intestinal, la stimulation immunitaire et la protection contre certains types de cancers. Il est d'un intérêt évident de pouvoir préparer de telles pellicules de manière parfaitement reproductible.

Au-delà du domaine agro-alimentaire, les grains de blé dépelliculés et pellicules de composition parfaitement maîtrisée peuvent trouver application dans les domaines de la chimie fine, de la pharmacie et de la cosmétique, par exemple pour l'enrobage de substances actives.

### Etat de la technique

Dans le cadre de la présente invention, par « dépelliculage », on entend un procédé par lequel les parties périphériques externes des grains de blé sont obtenues sous forme de fines lamelles allongées. Ces lamelles sont constituées d'un nombre de couches cellulaires limité, ce qui explique leur faible épaisseur, de même que leur aspect translucide. Comme il sera expliqué par la suite, cet aspect translucide est amplifié par l'action de l'ozone dans le cadre de la présente invention. Ces couches cellulaires correspondent histologiquement à l'épiderme, l'hypoderme, le mésocarpe et l'endocarpe.

Par « décorticage », on entend un procédé par lequel les parties périphériques externes des grains sont obtenues sous forme de poussières, ou de fins fragments desdites parties périphériques, ou de très fines particules desdites parties périphériques.

Il existe un certain nombre de demandes de brevet ayant trait directement ou indirectement au décorticage de grains de blé ou de céréales.

Ainsi FR 1 523 539 décrit un dispositif de décorticage comportant une humidification complémentaire des grains, avant l'opération proprement dite de décorticage, suivi de l'opération de décorticage en elle-même obtenue par application d'une énergie mécanique à des rotors assurant le décorticage et l'abrasion partielle des grains.

EP 0 145 600 décrit un dispositif de décorticage de graines dures et son application à l'isolement de polysaccharides purs. Ce document s'adresse en particulier aux graines de caroubes et décrit un système de décorticage mettant en oeuvre des radiations infrarouges en substitution de l'utilisation d'acides minéraux, suivi d'un traitement thermique.

FR 2 606 670 décrit un dispositif de décorticage par voie mécanique, à rotors multiples, particulièrement adapté au décorticage du lupin blanc doux. Le décorticage repose sur une action mécanique intense appliquée à des séries de rouleaux, à géométrie différenciée.

FR 2 607 027 décrit un dispositif de décorticage par application d'énergie mécanique mettent en oeuvre un rotor présentant des dispositions particulières de construction. Ce dispositif a été développé en particulier pour le décorticage du mil et du sorgho.

WO 88/05339 décrit un dispositif de décorticage par application d'énergie mécanique sur un rotor de forme particulière, appairé à un stator lui aussi de forme particulière, l'ensemble développé pour éviter l'écrasement du grain observé sur les décortiqueurs de l'art antérieur.

EP 0 820 814 décrit un dispositif de décorticage par application d'énergie mécanique à des rouleaux, lesquels sont revêtus de caoutchouc assurant une friction maximale lors du passage des grains dans l'espace ménagé entre les deux rouleaux. Cet espace peut être réglé en fonction du degré de décorticage que l'utilisateur souhaite obtenir.

EP 0 427 504 décrit un décortiqueur de grains et notamment une forme particulière du rotor et du stator participant à l'action mécanique de décorticage. GB 1 113 246 décrit un procédé de décorticage de grains de céréales comportant une humidification suivie d'un temps de repos compris entre 24 et 72 heures. Indépendamment des demandes de brevets mentionnées ci-dessus, il existe aujourd'hui sur le marché, deux dispositifs industriels utilisables par un meunier souhaitant décortiquer les grains avant mouture.

Il s'agit des dispositifs suivants :
- DCPeeler® développé par la société Bühler, et dédié en particulier au décorticage du blé (blé dur ou blé tendre).
- Peritec® Wheat Debranning System (VCW) développé par la société Sataké, et dédié au décorticage du riz, du blé, de l'orge, ainsi qu'à l'extraction du germe du maïs.

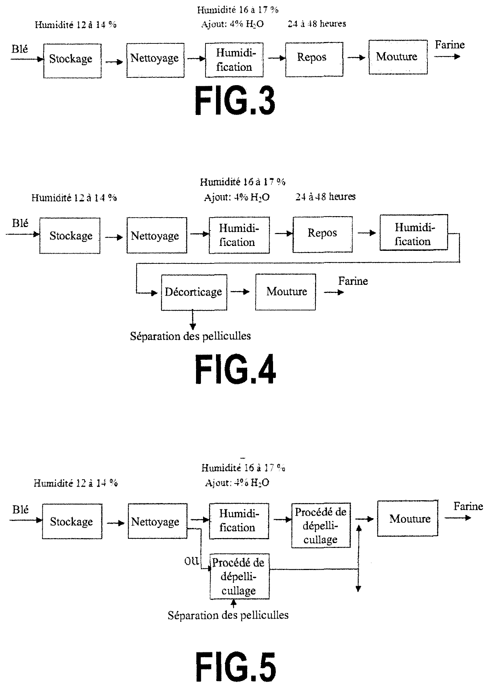

Les modifications introduites par ces dispositifs dans une ligne classique de mouture peuvent être mieux comprises en comparant les Figures 3 et 4.

La Figure 3 donne la représentation d'une ligne classique de mouture depuis le stockage des blés bruts jusqu'à l'obtention de la farine. Les principales composantes de ce schéma sont:
- Le stockage des blés bruts en silo, humidité naturelle comprise entre 12 et 14%,
- Le nettoyage des blés bruts,
- La phase d'humidification, destinée à amener l'humidité des blés entre 16 et 17% (ajout de environ 4% massique d'eau).
- La phase de repos des blés en silo, comprise entre 24 et 48 heures,
- La mouture proprement dite, et la production de farine.

La figure 4 donne la représentation d'une ligne classique de mouture dans laquelle a été inséré le dispositif de DCPeeler® ou Peritec®. Les principales composantes de ce schéma sont:
- Le stockage des blés bruts en silo, humidité naturelle comprise entre 12 et 14%,
- Le nettoyage des blés bruts,
- La phase d'humidification, destinée à amener l'humidité des blés entre 16 et 17% (ajout de environ 4% massique d'eau).
- La phase de repos, durée entre 24 et 48 heures,
- Une phase d'humidification secondaire préalablement au décorticage,
- Le procédé de décorticage,
- La mouture proprement dite, et la production de farine.

On voit ici que ces procédés impliquent une nouvelle humidification des grains avant introduction dans le décortiqueur. Cette nouvelle étape d'humidification vient en complément de la première humidification classique et se situe immédiatement après le temps de repos.

Le décorticage est obtenu grâce à l'application d'énergie mécanique sur un rotor appairé à un stator appelé « manteau ». Le dispositif Peritec® n'assure pas en fait un décorticage mais plutôt une abrasion des parties périphériques du grain, ce qui le différencie du dispositif DCPeeler®. L'abrasion est obtenue par application d'énergie mécanique sur des cylindres. Le grain à abraser circule dans l'espace ménagé entre les deux cylindres. Cet espace est réglable en fonction du degré d'abrasion souhaité sur une passe. Ce dispositif, séquentiel, permet par recirculation interne, de faire subir au grain à abraser plusieurs passes entre les cylindres, ce qui augmente le degré d'abrasion.

On notera que les deux dispositifs aujourd'hui commercialisés utilisent tous les deux une énergie mécanique assurant le décorticage ou l'abrasion, ainsi qu'une humidification supplémentaire préalable.

Généralement, la puissance électrique globale mise en oeuvre par ces machines est comprise entre 8,5 KW/tonne de grains et 15 KW/tonne de grains, suivant le débit massique de la machine, en fonction de la nature du grain à décortiquer, ainsi qu'en fonction du degré de décorticage recherché.

### Résumé de l'invention

Il subsiste un besoin dans le domaine de la meunerie de fournir un procédé permettant un dépelliculage des grains de blé avec une dépense énergétique minimale, un nombre d'étapes réduit et donc une durée limitée. Il existe également un besoin de maîtriser la séparation de couches externes des grains de blés afin de disposer de farines de compositions reproductibles, ainsi que de fournir des grains de blé dépelliculés de manière contrôlée pouvant servir dans des applications telles que des grains de blé précuit, des céréales pour le petit-déjeuner etc. Indépendamment des applications de grains de blé dépelliculés et de pellicules de blé dans le domaine agro-alimentaire, les compositions précises de glucides, protéines etc. dans certaines fractions de grains de blé permettent d'en prévoir des applications dans la chimie fine, dans la cosmétique et la pharmacie.

Il a maintenant été découvert, de façon surprenante, que les problèmes mentionnés ci-dessus peuvent être résolus dans leur ensemble par le traitement des grains par un gaz vecteur ozoné. Le traitement induit un dépelliculage de ces grains, de façon homogène, sans application d'énergie supplémentaire et sans avoir recours à des moyens mécaniques d'application de cette énergie supplémentaire. En d'autres termes, le dépelliculage homogène obtenu est d'origine physico-chimique et non pas, comme dans l'art antérieur, d'origine purement mécanique.

Ainsi, selon un premier aspect, la présente invention se rapporte à l'utilisation de l'ozone dans le dépelliculage des grains de blés. La présente invention se rapporte notamment à un procédé de dépelliculage de grains de blé comprenant les étapes suivantes :
a) le nettoyage des grains de blé brut ;
b) l'humidification des grains de blé ainsi nettoyés ;
c) la mise en contact des grains de blé, postérieurement à leur humidification à l'étape (b) ou en même temps que celle-ci, avec de l'ozone ;
d) la séparation des pellicules des grains de la masse de grains partiellement ou totalement dépelliculés à l'étape (c).

Selon un deuxième aspect, la présente invention se rapporte aux produits pouvant être obtenus par le procédé de l'invention, à savoir les grains de blé dépelliculés, et les pellicules qui en ont été séparées. La présente invention se rapporte également à l'utilisation à la fois des grains de blé dépelliculés et des pellicules de grains de blé dans la chimie fine, ainsi que dans la pharmacie et la cosmétique, par exemple pour l'enrobage de principes actifs.

Selon un troisième aspect, la présente invention se rapporte une installation spécifique pour la mise en oeuvre de ce procédé de dépelliculage. L'installation selon l'invention comporte notamment :
a) des moyens (5) de nettoyage desdits grains de blé ;
b) des moyens d'humidification desdits grains de blé ;
c) un réacteur d'ozonation (7) permettant la mise en contact desdits grains de blé avec de l'ozone contenu dans un gaz vecteur et/ou avec de l'eau ozonée ; et
d) un dispositif (10) permettant la séparation des pellicules des grains de blés traités à l'ozone.

La demanderesse a déjà décrit dans la demande de brevet WO 01/43556 les caractéristiques et les paramètres de fonctionnement d'un procédé destiné à la décontamination des grains avant mouture. Dans ce document il est décrit que le traitement, par un gaz vecteur ozoné, des grains de blé dans un réacteur clos, étanche, à recirculation interne, sous légère pression de gaz, induit une diminution de la charge microbiologique, une élimination des résidus de pesticides et une élimination des mycotoxines. Dans cette demande antérieure, visant principalement la fabrication de farines présentant un haut niveau de sécurité alimentaire, il n'est nullement envisagé d'utiliser l'ozone pour assurer le dépelliculage des grains.

### Brève description des figures

La Figure 1 montre une coupe schématique d'un grain de blé tendre (schéma fourni par l'INRA).
La Figure 2 montre un exemple typique d'une « courbe de cendres ».
La Figure 3 donne la représentation d'une ligne classique de mouture depuis le stockage des blés bruts jusqu'à l'obtention de la farine.
La Figure 4 donne la représentation d'une ligne classique de mouture dans laquelle a été inséré le dispositif de DCPeeler® ou Peritec®.
La Figure 5 donne la représentation d'un procédé selon l'invention.
Les Figures 6 et 7 sont des photographies des pellicules de blé obtenues selon l'invention.
Les Figures 8 et 9 sont des photographies des grains de blé dépelliculés obtenus selon l'invention.
La Figure 10 donne une vue de grains de blé dépelliculés par le procédé selon l'invention ainsi que les pellicules correspondantes, après séparation.
La Figure 11 montre une représentation schématique d'un mode de réalisation actuellement préféré d'une installation permettant le traitement des grains de blé selon l'invention.

### Description détaillée de l'invention

La Figure 5 donne la représentation d'un procédé selon l'invention.

Les principales composantes de ce schéma sont:
- le stockage des blés bruts en silo, dont l'humidité naturelle est généralement comprise entre 12 et 14%,
- le nettoyage des blés bruts,
- la phase d'humidification, destinée à amener l'humidité des blés à une plage contrôlée (l'humidité des grains est mesurée par hydrométrie ou par pesage). Lorsque l'on prévoit de moudre les grains pour préparer de la farine, on amènera l'humidité des grains à une valeur généralement comprise entre 16 et 17% en masse d'eau par rapport à la masse totale des grains humidifiés, par ajout de environ 4% massique d'eau. Il est important de noter cependant que, lorsqu'une application dans un autre domaine (chimie fine, cosmétique, pharmacie) est envisagée, toute teneur d'eau peut être utilisée à ce stade, de préférence entre 13% et 35% en masse d'eau par rapport à la masse des grains humidifiés. Concernant le pH des grains traités, ceci n'est pas particulièrement limité mais sera généralement neutre, c'est-à-dire compris entre 6,5 et 7,5 et de préférence entre 6,9 et 7,1,
- un procédé de traitement des grains par l'ozone, et
- la mouture proprement dite, et la production de farine.

Tel qu'il a été précisé dans les paragraphes précédents, l'humidification classique des blés peut être effectuée directement dans le réacteur du procédé de traitement à l'ozone, ce qui est matérialisé par la variante au schéma, distinguée par la conjonction « ou ». Dans cette configuration, les principales composantes du schéma sont:
- le stockage des blés bruts en silo, humidité naturelle comprise entre 12 et 14%,
- le nettoyage des blés bruts,
- le procédé de traitement des grains par l'ozone, avec l'humidification des grains à un niveau prédéfini, et
- la mouture proprement dite, et la production de farine.

Il est à noter que dans cette configuration, ainsi que dans la précédente, le dépelliculage s'effectue au cours du traitement des grains par l'ozone. Les parties périphériques dépelliculées sont séparées des grains à la sortie du procédé de traitement à l'ozone avant, pour des applications dans la meunerie, l'admission dans la phase de mouture.

Quant aux moyens pour séparer pleinement les pellicules qui sont plus ou moins détachées des grains de blé lors du traitement des grains par l'ozone, notamment lors de la vidange du réacteur, il existe divers dispositifs pouvant assurer une telle séparation.

De façon générale, tout dispositif de séparation fonctionnant suivant le principe de différence de masse ou de différence de masse volumique peut être utilisé pour séparer les grains préalablement traités, des pellicules séparées par effet physico-chimique (objet de l'invention).

Un premier dispositif qui peut être utilisé est un dispositif de type cyclone, assurant la séparation des grains traités et des pellicules par effet centrifuge généré par un flux d'air. Un tel dispositif est notamment inséré après la trémie basse collectant les grains après traitement. À la sortie de cette trémie basse, les grains sont généralement admis dans une écluse de dosage, assurant le transfert des grains vers un circuit de transfert pneumatique. C'est le débit d'air global assurant le transfert pneumatique qui génère au niveau du cyclone l'effet centrifuge. Les grains séparés de leurs pellicules au niveau du cyclone peuvent ainsi être extraits par le refus du dit cyclone, cependant que les pellicules, mues par le flux d'air sont extraites du cyclone par la partie centrale haute. Le mélange pellicules + flux d'air de transfert, est généralement dirigé vers un filtre assurant la séparation des pellicules du flux d'air et assurant corrélativement la rétention des fines poussières. Dans certains cas, ce filtre peut être doublé d'un second filtre à air séparant exclusivement les fines poussières. En d'autres termes, le premier filtre assure la séparation des pellicules du flux d'air et des fines poussières, cependant que le second filtre débarrasse le flux d'air de l'ensemble des fines poussières.

Un second dispositif qui peut être utilisé est un dispositif à tables tamis vibrantes. Le flux d'air servant au transfert des grains, conduit ces derniers à l'entrée d'une table vibrante animée d'un mouvement rapide de va et vient horizontal, laquelle table vibrante sépare naturellement les grains du flux d'air (cette opération peut être effectuée par plusieurs tables montées en série). Les grains triés et séparés du flux d'air sont recueillis à la partie inférieure de la table tamis vibrante, cependant que le flux d'air ayant assuré le transfert des grains est dirigé vers un filtre à poussière assurant la rétention des poussières et leur séparation du flux d'air.

Un troisième dispositif qui peut être utilisé est un dispositif à tables tamis vibrantes auxquelles on adjoint un flux d'air perpendiculaire aux tables permettant un tri densimétrique. Les grains sont recueillis à la sortie des tables vibrantes cependant que les pellicules sont entraînées par le flux d'air perpendiculaire et le flux d'air moteur, généralement vers un dispositif de filtres séparateurs multiétagés.

Selon un mode de réalisation particulièrement préférentiel, à la sortie du réacteur assurant le traitement à l'ozone des grains de blé selon l'invention, les pellicules peuvent être extraites de la masse des grains par passage dans un dispositif classique de séparation connu de l'homme de l'art et communément appelé « tarare ». Ce dispositif assure un tri et une séparation densimétrique par application simultanée d'une vibration horizontale générée à l'aide d'un plateau-tamis vibrant, et application d'un flux d'air ascendant à travers le plateau-tamis vibrant. La conjonction de ces deux systèmes minimise considérablement le flux d'air nécessaire au tri densimétrique, et nécessite par voie de conséquence beaucoup moins d'énergie électrique pour assurer le flux d'air. A la sortie de ce dispositif, les grains séparés des pellicules sont recueillis dans une goulotte et dirigés vers l'opération de mouture, tandis que les pellicules, séparées par le flux d'air sont recueillies et dirigées vers un stockage.

Dans le cadre du procédé de dépelliculage selon la présente invention, la quantité d'ozone utilisée est de préférence comprise entre 0,5 et 20 exprimée en grammes d'ozone par kilo de grains. La durée de mise en contact des grains avec l'ozone est de préférence comprise entre 5 et 70 min, et plus préférentiellement entre 15 et 40 min. L'ozone utilisé est produit de préférence à partir d'un gaz vecteur sec et la concentration de l'ozone dans le gaz vecteur est de préférence comprise entre 80 et 160 g/m³ TPN, et plus préférentiellement entre 100 et 120 g/m³ TPN. La pression du gaz vecteur ozoné lors de la mise en contact avec les grains est de préférence comprise entre 200 et 800 mbar, de préférence de 200 à 700 mbar, et plus préférentiellement de 200 mbar ou de 300 mbar à 600 mbar.

La température dans le réacteur lors du traitement à l'ozone sera généralement une température ambiante classique, le plus souvent comprise entre 20°C et 25°C en début de réaction. De par la nature exothermique de la réaction avec l'ozone, la température peut augmenter pour atteindre 30°C à 35°C, voire 40°C en fin de réaction. La température dans le réacteur au cours de la réaction se situera donc de préférence entre 20°C et 40°C, avec une température de départ compris de préférence entre 20°C et 25°C et une température en fin de réaction avec l'ozone compris de préférence entre 30°C et 35°C.

Conformément à la présente invention, le réacteur de mise en contact des grains de blé avec l'ozone peut être alimenté indépendamment par de l'ozone sec, de l'ozone humidifié ou de l'eau ozonée. Dans un mode de réalisation avantageux, dans le cadre du procédé de dépelliculage selon la présente invention, l'eau servant à l'humidification des grains est préalablement traitée par de l'ozone. Il peut être avantageux de combiner un apport d'ozone aux grains de blé sous forme d'eau ozonée avec un apport dans le ciel gazeux du réacteur.

L'ozone est produit à partir d'un gaz vecteur avantageusement constitué d'oxygène pur stocké dans un conteneur. Alternativement, le gaz vecteur peut être produit à partir d'air ambiant, filtré, comprimé et séché au point de rosée compris entre -50 et -70°C. Alternativement encore, le gaz vecteur peut être constitué d'un mélange en toute proportion d'oxygène pur et d'air filtré, comprimé et séché.

A la différence des procédés de décorticage connus dans l'art antérieur, le procédé selon la présente invention ne nécessite pas de phase de repos après l'humidification qui suit le nettoyage. Le fait de pouvoir se dispenser à la fois d'une phase de repos et d'une nouvelle étape d'humidification, indépendamment des autres avantages de la présente invention, représente un gain en efficacité par rapport à l'état de la technique.

Dans le cadre de la présente invention, les grains sont soumis à une première phase de nettoyage destinée notamment à séparer les particules les plus légères, par exemple par soufflage. Cette étape est nécessaire afin d'éliminer les pierres, parties métalliques, poussière telluriques etc. qui contaminent le blé brut récolté sur le terrain.

D'une façon générale, le réacteur de mise en contact utilisé dans le procédé de l'invention peut être vertical et constitué d'un corps cylindrique ou cylindroconique à base conique comportant un dispositif interne assurant une circulation et un temps de séjour des grains dans le réacteur de mise en contact suffisants pour assurer un traitement optimal par l'ozone. La mise en contact des grains avec l'ozone peut être réalisée de façon continue ou de façon discontinue dans le réacteur. De façon préférentielle, le réacteur permet une mise en contact verticale et comporte un dispositif de recirculation interne des grains.

Le taux de recirculation interne des grains (c'est-à-dire le nombre de passages des grains dans la zone de mise en contact avec l'ozone) est habituellement de l'ordre de 10 à 40, et de préférence de 20 à 30. La recirculation interne peut être assurée par un dispositif de type à vis d'Archimède chemisée entraîné par un dispositif électromécanique permettant d'ajuster la vitesse de rotation de la vis pour assurer avec précision le taux de recirculation requis, qui dépend également du pas et du diamètre de la vis.

Le réacteur de mise en contact est habituellement muni d'un dispositif d'évacuation du gaz réactif après réaction, d'un système de pulvérisation d'eau ozonée alimenté par une canalisation, d'un dispositif de sécurité alimenté en eau sous pression, d'une soupape de sécurité et d'un disque de rupture.

En partie basse, le réacteur de mise en contact comporte habituellement un dispositif d'introduction et de répartition du gaz ozoné conçu de telle sorte à assurer une répartition du gaz dans la masse de grains avec une vitesse d'injection suffisante pour assurer une bonne pénétration dudit gaz dans la masse à traiter. D'une façon générale, la vitesse d'injection sera comprise entre 10 et 80 m.s⁻¹ de préférence entre 30 et 50 m.s⁻¹.

Par ailleurs, la réaction d'ozonation étant de type exothermique, le corps du réacteur de mise en contact est habituellement muni d'un dispositif de refroidissement permettant de maintenir une température constante à l'intérieur dudit réacteur de mise en contact et dans le milieu réactionnel sans gradient de température vertical ou radial, et ce durant le temps nécessaire à la réaction. Ce refroidissement efficace du réacteur de mise en contact favorise une utilisation sécuritaire de celui-ci, et permet un contrôle précis de la réaction d'ozonation. Le dispositif de refroidissement peut être par exemple alimenté en eau froide sous pression ou par l'intermédiaire d'un circuit d'eau glacée produite par un groupe frigorifique.

Les matériaux constitutifs du corps du réacteur de mise en contact seront choisis de telle sorte à assurer une résistance à l'abrasion et à l'oxydation générée par la présence d'ozone à forte concentration. Un tel matériau peut être par exemple un acier inoxydable, connu de l'homme de métier.

Selon un mode avantageux de mise en oeuvre de la présente invention, celle-ci se rapporte à des installations du type comportant :
a) des moyens (5) de nettoyage desdits grains de blé ;
b) des moyens d'humidification desdits grains de blé ;
c) un réacteur d'ozonation (7) permettant la mise en contact desdits grains de blé avec de l'ozone contenu dans un gaz vecteur et/ou avec de l'eau ozonée ; et
d) un dispositif (10) permettant la séparation des pellicules des grains de blés traités à l'ozone,
également caractérisée en ce que le dispositif de séparation d) utilise un flux d'air pour séparer les grains de blés des pellicules en fonction des différences de masse ou de masse volumique, ledit dispositif de séparation étant choisi dans le groupe constitué par : un dispositif de type cyclone, un dispositif à tables tamis vibrantes, et un dispositif à tables tamis vibrantes auxquelles on adjoint un flux d'air perpendiculaire aux tables tamis vibrantes, et /ou
également caractérisée en ce que les moyens d'humidification b) comprennent une arrivée d'eau ozonée (20) dans le réacteur d'ozonation (7), ledit réacteur d'ozonation (7) comportant également une arrivée (23) d'ozone gazeux contenu dans un gaz vecteur.

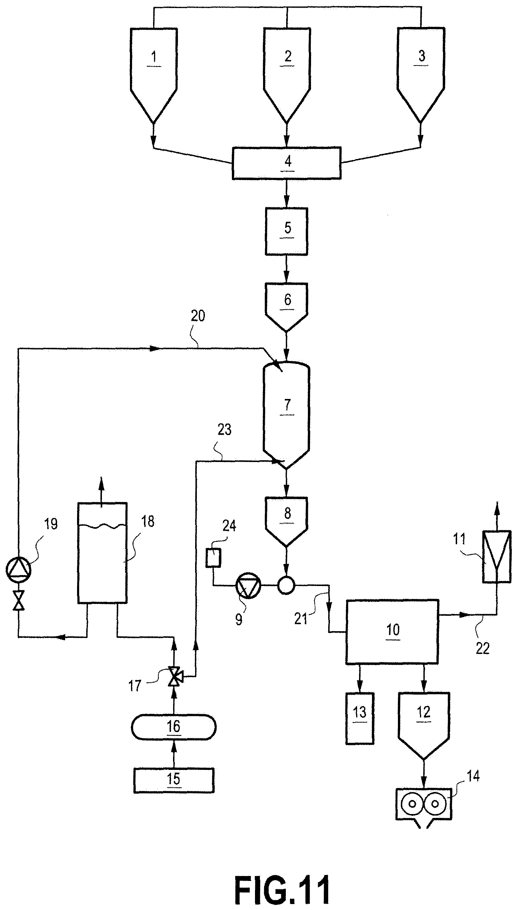

Selon un mode de réalisation actuellement préféré et à titre d'exemple non-limitatif, un dispositif global de dépelliculage de grains des blé selon la présente invention, comprenant les moyens de stockage et de mélange de blé(s) et de broyage de grains de blé dépelliculés pour la production de la farine, est représenté à la Figure 11. Les repères du schéma de la Figure 11 ont les identités suivantes :
- Les repères 1, 2, et 3, correspondent aux silos de stockage des blés bruts existants sur les sites meuniers.
- Le repère 4 correspond au système de mélange des blés permettant d'obtenir un mélange typique approprié à l'obtention de produits déterminés à partir de blés d'origines variétales diverses (stockés dans les silos 1, 2, 3).
- Le repère 5 correspond au nettoyage des blés préalablement au traitement par l'ozone. Ce nettoyage correspond à un procédé classique meunier et comprend généralement plusieurs étapes.
- Le repère 6 correspond à une trémie destinée à l'alimentation du réacteur, cette trémie peut être équipée de dispositifs automatiques de pesage pour déterminer précisément la quantité de blé introduite dans le réacteur d'ozonation.
- Le repère 7 correspond au réacteur d'ozonation proprement dit dans lequel les grains de blé sont mis en contact intime avec le gaz réactif ozone. Ce réacteur (repère 7) comporte une arrivée d'eau d'humidification (repère 20) ainsi qu'une arrivée de gaz ozoné (repère 23).
- Le repère 8 correspond à la trémie de soutirage du réacteur recevant les blés après traitement. Cette trémie de soutirage est munie à sa partie basse d'un dispositif de prise en charge et de dosage communément appelé « écluse de prise en charge » et qui permet l'introduction du blé dans le dispositif de transfert pneumatique (repère 21).
- Le repère 9 correspond au surpresseur d'air permettant l'alimentation du dispositif de transfert de grains. À l'aspiration de ce surpresseur est positionné un filtre (repère 24) permettant la filtration préalable de l'air avant surpresssion.
- Le repère 10 correspond au dispositif de séparation des pellicules et des grains de blé. Ce dispositif de type « tarare » est muni d'une arrivée de grains et d'air comprimé de transfert (repère 21), d'une sortie d'air après séparation (repère 22), d'un filtre séparateur (repère 11), d'une sortie des pellicules et d'une sortie des grains vers la trémie de reprise de blé (repère 12). Le dispositif « tarare » permet la séparation des grains blé traités, de l'ensemble des pellicules séparées préalablement physico-chimiquement, leur récupération, et la séparation de l'air moteur des deux phases précédentes.
- Le repère 11 correspond à un filtre séparateur permettant de séparer les fines poussières de l'air moteur. Ce filtre (repère 11) est alimenté par une canalisation (repère 22) assurant la liaison entre le dispositif « tarare » et le filtre séparateur.
- Le repère 12 correspond à une trémie de reprise du blé qui reçoit le blé séparé des pellicules par le dispositif « tarare ». Cette trémie de reprise des blés permet également l'alimentation du dispositif de broyage (repère 14).
- Le repère 13 correspond à un dispositif de réception et de stockage des pellicules traitées, séparées des grains de blé par le dispositif « tarare ». Ce dispositif de stockage des pellicules permet de conserver cette matière à l'abri des contaminations extérieures.
- Le repère 14 correspond à un dispositif classique de broyage permettant d'obtenir les farines à partir des grains de blé traités.
- Le repère 15 correspond au stockage d'oxygène destiné à la fabrication de l'ozone. C'est le gaz vecteur qui permet la fabrication de l'ozone gazeux.
- Le repère 16 correspond au générateur d'ozone fabriquant *in situ* le gaz réactif.
- Le repère 17 est un dispositif de vannes permettant de diriger une partie de gaz ozoné vers le réacteur (repère 7), par l'intermédiaire de la canalisation repérée 23.
- Le repère 18 correspond à un dispositif de préparation d'eau ozonée ou d'eau hyper-ozonée pour l'humidification des grains.
- Le repère 19 correspond à la pompe de reprise permettant d'injecter l'eau nécessaire à l'humidification des grains, à l'intérieur du réacteur (repère 7), à l'aide du dispositif de canalisation, repère 20.
- Le repère 20 correspond à la canalisation permettant de relier la pompe d'eau ozonée (repère 19 au réacteur (repère 7).
- Le repère 21 correspond à la canalisation véhiculant les grains de blé, les pellicules, et l'air moteur entre la trémie (repère 8) et le dispositif « tarare » (repère 10).
- Le repère 22 correspond à la canalisation de liaison reliant le dispositif « tarare » (repère 10) au filtre séparateur (repère 11), cette canalisation véhicule l'air moteur et les fines poussières en suspension.
- Le repère 23 correspond à la canalisation véhiculant l'ozone gazeux entre le dispositif de vannes (repère 17) et le réacteur (repère 7).
- Le repère 24 désigne un filtre séparateur de poussière monté à l'aspiration du surpresseur d'air (repère 9), surpresseur qui assure la fourniture de l'air moteur pour le transfert du blé et des pellicules entre la trémie de soutirage et le dispositif de séparation de séparation « tarare » (repère 10).

### Résultats : Comparaison du procédé selon l'invention avec les méthodes de l'état de la technique

### Simplification au niveau du procédé et réduction de la dépense énergétique

La comparaison des procédés d'une part selon l'invention et d'autre part selon l'état de la technique (procédés DCPeeler® ou Peritec® agissant par application d'une énergie mécanique sur les dispositifs assurant une friction ou une abrasion du grain) fait apparaître la simplification apportée par le procédé selon l'invention qui traite les blés, les décontamine, les dépellicule en une seule opération et supprime par ailleurs les silos nécessaires pour assurer le temps de repos après humidification, temps de repos compris entre 24 et 48 heures. La même comparaison fait apparaître la complexification de la ligne classique, lorsque l'on veut décortiquer, car cette opération nécessite l'ajout d'une humidification supplémentaire. Non seulement une phase de repos après humidification des grains et préalablement au dépelliculage n'est pas nécessaire dans le cadre de la présente invention, où le dépelliculage est effectué au moyen de l'ozone, il est préférable de ne prévoir aucune phase de repos à ce stade. Un gain de temps et une utilisation plus efficace du matériel de traitement des grains avec une vitesse de production plus élevée par rapport aux procédés connus peuvent donc être réalisés.

Si l'on considère le temps de procédé à compter du début de l'étape d'humidification et jusqu'au début de la phase de mouture, une ligne classique telle que représentée à la Figure 3 implique une durée d'environ 10 minutes le plus souvent pour la phase d'humidification et 24 à 48 heures pour la phase de repos. Les deux étapes se situant entre le nettoyage préalable et la mouture requièrent donc environ 1 jour (+ le temps d'humidification) jusqu'à 2 jours (+ le temps d'humidification). Il est à noter qu'il s'agit dans la pratique de procédés en continu, et donc ces temps représentent les temps de transit pour une masse donnée (par exemple, une tonne) de blé à traiter. Concernant une ligne classique de mouture dans laquelle a été inséré le dispositif DCPeeler® ou Peritec®, telle que représentée à la Figure 4, le temps total à compter du début de l'humidification jusqu'au début de la mouture est au moins légèrement supérieur à 1 jour et au plus légèrement supérieur à 2 jours. En effet, bien que les étapes d'humidification et de décorticage soient relativement rapides (de l'ordre de 10 minutes), la phase de repos obligatoire rend le procédé global relativement consommateur de temps. En revanche, selon le procédé de l'invention, la durée des étapes entre la fin du nettoyage et le début de la mouture, soit l'humidification et le dépelliculage, qui peuvent avoir lieu en même temps, sera généralement inférieure à 75 minutes. La suppression de la phase de repos influe donc considérablement sur la durée totale du procédé et l'optimisation de l'utilisation du réacteur.

L'introduction dans une ligne classique de mouture d'un procédé de décorticage, de type DCPeeler® ou Peritec®, entraîne une consommation de puissance supplémentaire de 8,5 à 15 KW/tonne de blé décortiqué ainsi qu'une consommation de puissance supplémentaire de 0,8 à 1,3 KW / tonne pour assurer la séparation des fragments extérieurs enlevés de la masse de grains. De façon globale, l'introduction de ces dispositifs dans une ligne classique de mouture entraîne une consommation de puissance supplémentaire comprise entre 9,3 et 16,3 KW / tonne.

En se tenant au strict concept de dépelliculage, l'introduction du procédé selon l'invention dans une ligne classique de mouture entraîne une surconsommation de puissance comprise entre 0,4 et 0,9 KW / tonne, exclusivement pour la séparation des pellicules des grains de blé. Tenant compte de la production d'ozone, on a estimé que le procédé selon l'invention requiert généralement une consommation totale de 6,4 à 6,9 kW / tonne de grains pour un traitement représentatif d'un kg d'ozone par tonne de grains.

### Caractéristiques des pellicules obtenues selon l'invention

Dans le cadre de la présente invention, les pellicules de grains de blé extraites après traitement à l'ozone sont blanchies et translucides. En raison de leur haut niveau de décontamination, elles sont parfaitement réutilisables soit en ré-introduction dans des préparations de type mixes ou farines, soit le cas échéant dans les aliments pour les animaux.

Le tableau 1 ci-dessous établit les comparaisons des caractéristiques physiques des pellicules ou fragments extérieurs du grain obtenues par les différents procédés, étant entendu que la teneur en eau est réglée de manière à permettre une mouture ultérieure pour la production de farine pour les applications dans le domaine de la meunerie. Dans le cadre distinct du procédé selon l'invention pour la préparation de grains de blé et de pellicules servant à d'autres fonctions, des teneurs en eau différentes peuvent être envisagées.

**Tableau 1 : Comparaison des caractéristiques physiques des pellicules ou fragments extérieurs obtenues par les différents procédés**

| | **Longueur (µm)** | **Teneur en H₂O (%)** | **Couleur** | **Couches concernées** |
|---|---|---|---|---|
| **DCPeeler®** | 1000 - 3000 | 25 | rougeâtre | Jusqu'à la Testa |
| **Peritec®** | ≤ 100 | 25 | rougeâtre | Dépendant du nombre de passes |
| **Selon la présente invention** | 1000 - 5000 | 18 | blanc | Jusqu'à la Testa |

Lorsque l'on compare (1^{ère} colonne du tableau) la longueur des pellicules ou fragments extérieurs exprimée en µm, on constate que les fragments extérieurs provenant du procédé DCPeeler® présentent une longueur comprise entre 1000 et 3000 µm, ce qui démontre une application d'énergie mécanique liée à un phénomène de friction.

Le procédé Peritec® génère quant à lui des fragments extérieurs dont la longueur est inférieure ou égale à 100 µm, ce qui démontre une application d'énergie mécanique liée à un phénomène d'abrasion.

Le procédé selon l'invention génère des pellicules dont la longueur est comprise entre 1000 et 5000 µm, cette longueur plus importante des pellicules étant liée au fait que lesdites pellicules sont détachées par effet physico-chimique et conservent, de ce fait, une intégrité dimensionnelle.

Lorsque l'on compare (2^{ème} colonne du tableau) la teneur en eau des pellicules ou fragments extérieurs, il est manifeste que le procédé DCPeeler® et le procédé Peritec® génèrent des fragments extérieurs beaucoup plus hydratés que le procédé de traitement à l'ozone selon l'invention.

Ceci s'explique de par le fait, déjà analysé, que le procédé DCPeeler® et le procédé Peritec® nécessitent une hydratation complémentaire juste avant le procédé de décorticage. Le procédé de traitement à l'ozone selon l'invention quant à lui ne nécessitant pas d'humidification complémentaire préalable au traitement du grain, l'humidité résiduelle des pellicules étant celle existant au moment du traitement. Ainsi, selon un mode préférentiel de l'invention, celle-ci se rapporte à des pellicules de grains de blé présentant une teneur en eau par rapport à la masse des pellicules humidifiées de 15 et 20 %, de préférence entre 16 et 20 %, et plus préférentiellement entre 17 et 19 %.

Lorsque l'on compare (3^{ème} colonne du tableau) la couleur des pellicules ou fragments extérieurs, on constate que le procédé DCPeeler® génère des fragments extérieurs de couleur rougeâtre, que le procédé Peritec® génère lui aussi des fragments extérieurs de couleur rougeâtre, alors que le procédé de traitement à l'ozone selon l'invention génère des pellicules de couleur blanche. En effet, l'ozone a la propriété de blanchir les structures ligno-cellulosiques, ce qui est typiquement le cas des parties périphériques des grains de blé.

Les pellicules obtenues par le procédé selon l'invention présentent également une caractéristique physique particulière, c'est celle d'avoir un aspect translucide, ce qui démontre la faible épaisseur de la pellicule retirée, contrairement aux deux autres procédés, d'origine mécanique, lesquels arrachent ou abrasent mécaniquement les grains de blé.

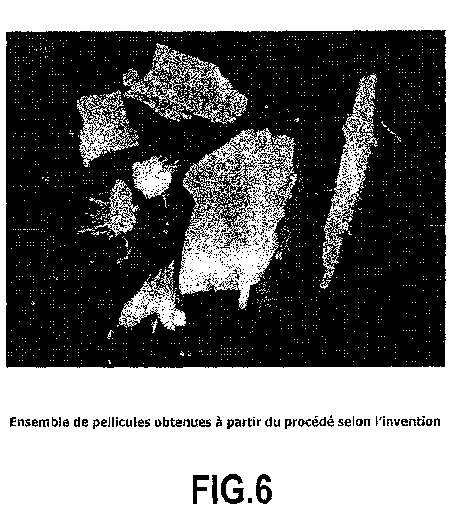

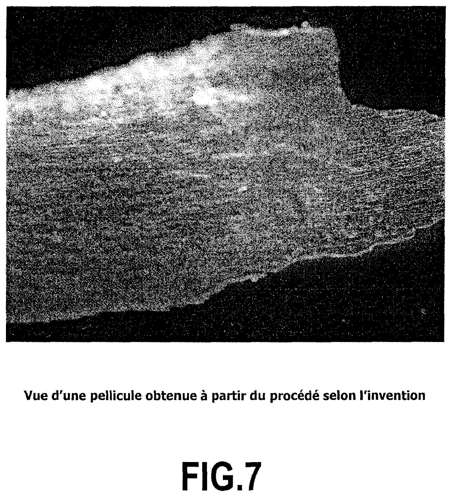

Cette caractéristique particulière est parfaitement matérialisée par les photos des Figures 6 et 7.

Le grain de blé dépelliculé après traitement à l'ozone contient encore trois couches histologiques périphériques: il s'agit de la testa, la bande hyaline et la couche à aleurone. Ces trois couches sont légèrement modifiées par l'application du procédé suivant l'invention. Ces modifications concernent en particulier la transformation d'une partie des fibres insolubles en fibres solubles. Ces modifications sont généralement considérées comme une nette amélioration en termes nutritionnels. Quantitativement, on peut considérer qu'environ 5% des fibres insolubles sont transformées en fibres solubles. Parallèlement, les fibres solubles passent d'environ 5% (pourcentage initial) à 10% des fibres totales (pourcentage après traitement), ce qui présentent un net avantage pour les aspects nutritionnels et de santé (transit intestinal, stimulation immunitaire, protection contre certains types de cancers...). Le tableau suivant met en évidence cette modification du contenu en fibres, au niveau des pellicules, ainsi qu'au niveau du son, comparativement à un son obtenu classiquement sans traitement préalable.

**Tableau 2 - Analyse des pellicules et parties périphériques obtenues après traitement à l'ozone selon l'invention**

| Contenu (en g dans 100 g de pellicule ou de son) | Pellicules selon l'invention | | Son selon l'invention | | Son obtenu classiquement | |
|---|---|---|---|---|---|---|
| Fibres solubles | 10,6 | 18,09 % | 4,38 | 10,61 % | 2,4 | 5,88 % |
| Fibres insolubles | 48 | 81,91 % | 36,88 | 89,39 % | 38,4 | 94,12 % |
| Fibres totales | 58,6 | 100,00 % | 41,25 | 100,00 % | 40,8 | 100,00 % |
| | | | | | | |
| Lignine | 23,2 | 45,05 % | 10,41 | 23,91 % | 10,9 | 25,29 % |
| Cellulose | 21,7 | 42,14 % | 9,53 | 21,87 % | 10,5 | 24,36 % |
| Hémicellulose | 6,6 | 12,82 % | 23,62 | 54,23 % | 21,7 | 50,25 % |
| Parois végétales insolubles | 51,5 | 100,00 % | 43,56 | 100,00 % | 43,1 | 100,00 % |

La présente invention se rapporte également à la production de fines pellicules commercialisables et ayant des caractéristiques biochimiques particulières (cf. tableau ci-dessus). Les particules obtenues par décorticage ne sont pas commercialisables en l'état, compte tenu de la concentration en contaminants indésirables. A contrario, les pellicules issues du procédé mis au point par la demanderesse constituent un produit original, utilisable en l'état, offrant des caractéristiques nutritionnelles nouvelles, réclamées par le marché. En particulier ces pellicules présent un taux de fibres alimentaires inégalé, elles sont blanchies, de faible épaisseur, translucides, et peuvent se prêter à des opérations multiples de transformation.

### Caractéristiques des grains de blé dépelliculés obtenus selon l'invention

Comme il a été indiqué à la quatrième colonne du tableau 1 ci-dessus, le procédé DCPeeler® progresse et atteint la couche appelée testa, cependant que le procédé Peritec® peut aller au-delà, l'abrasion du grain de blé dépendant étroitement du nombre de passes des grains de blé entre les rouleaux pratiquant l'abrasion. Le procédé de traitement à l'ozone selon l'invention, sans avoir recours à des réglages mécaniques ou à des passes multiples, arrive naturellement jusqu'à la couche appelée testa.

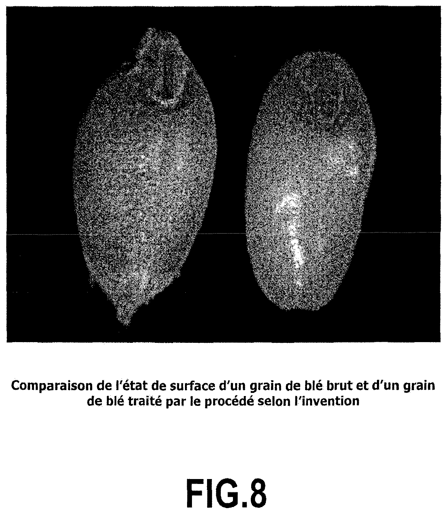

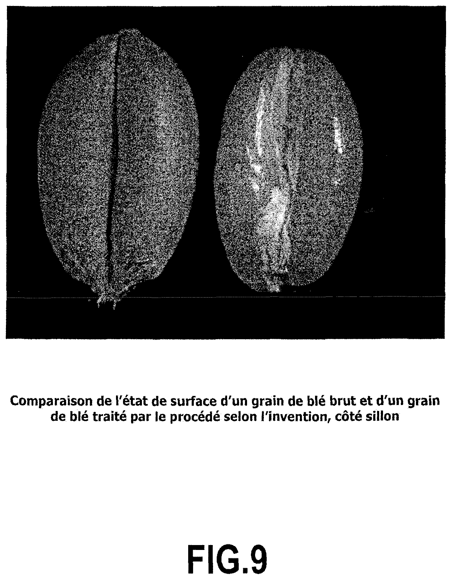

L'examen sous grossissement d'un grain de blé traité par le procédé de traitement à l'ozone selon l'invention, comparé à un grain non traité, fait apparaître (voir Figures 8 et 9) que le grain traité par le procédé selon l'invention (grain de droite) présente une surface lisse, brillante, dépourvue d'aspérités, où la brosse (située à l'extrémité inférieure du grain) a totalement disparu. Le germe du grain de blé, situé à l'extrémité supérieure du grain, a lui aussi été nettoyé et débarrassé de la partie de l'enveloppe qui le protège naturellement.

Le grain non traité (à gauche sur la photo) fait apparaître une surface rugueuse, plissée, avec, en partie basse, la brosse, et en partie haute, la gaine de protection du germe.

La comparaison entre les deux photos démontre de façon claire les effets de dépelliculage obtenus par le procédé selon l'invention.

Lorsque l'on utilise de l'énergie mécanique pour frictionner ou abraser des grains de blé, leur surface est nécessairement moins lisse, non brillante, avec de nombreuses aspérités correspondant à l'arrachement des partie périphériques du grain. De façon générale, la surface d'un grain de blé traité par le procédé DCPeeler® ou le procédé Peritec® est nettement moins lisse que celle d'un grain de blé non traité (état brut).

Le procédé DCPeeler® ou le procédé Peritec® dégrade plus ou moins la qualité de la surface des grains de blé. C'est une conséquence directe de l'application d'énergie mécanique sous forme d'abrasion ou de friction.

La Figure 9 prise côté sillon, montre également l'état de surface d'un grain de blé brut (grain de gauche) comparé à un grain de blé traité par le procédé de traitement à l'ozone selon l'invention (grain de droite).

Les mêmes remarques que précédemment s'appliquent à cette photo concernant la qualité de surface, le brillant, l'absence de brosse et de gaine de protection du germe.

On observe également que la pellicule incluse dans l'invagination du sillon est partiellement détachée, ce qui favorisera sa séparation totale lors de la mouture.

Si l'on souhaitait séparer totalement du sillon la pellicule qui le protège, par un procédé mécanique, il est évident que l'abrasion du grain devrait être poussée au détriment de la conservation des parties périphériques du grain.

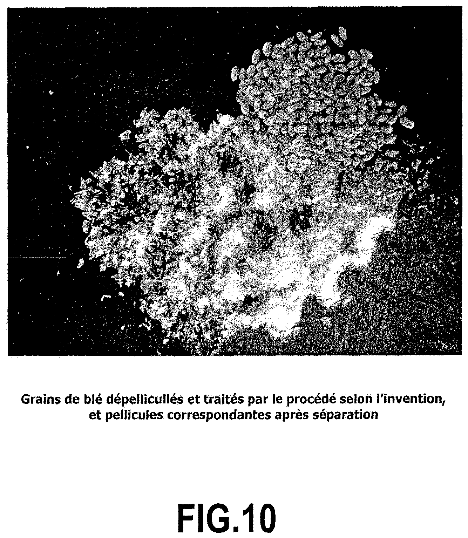

Il est manifeste, à la vue des photos ci-dessus que la qualité de surface du grain de blé dépelliculé par le procédé selon la présente invention, permet toute utilisation directe de ce grain, sans passer nécessairement par une phase de mouture (grain de blé précuit, céréales pour petit déjeuner...). La Figure 10 donne une vue de grains de blé dépelliculés par le procédé selon l'invention ainsi que les pellicules correspondantes, après séparation. La brillance des grains de blé peut être observée, de même que la taille et l'aspect translucide et blanc des pellicules.

Les grains de blés dépelliculés ont des caractéristiques spécifiques qui ouvrent des possibilités nouvelles. Par exemple, on peut obtenir des grains dont la partie périphérique a été modifiée (cf. tableau 2), le son contenant plus de fibres solubles, ce qui est plus intéressant nutritionnellement. Autre exemple, les possibilités de modification légère, mais néanmoins significative, de contenu en sucres libres, ce qui améliore le goût (cf. tableau 3 ci-dessous).

**Tableau 3 - modification des taux de sucres libres du grain de blé après traitement**

| Quantités de sucres en mg par 100 g de blé | Blé brut sans traitement | Blé traité suivant l'invention (conditions optimales) |
|---|---|---|
| Glucose | 91,40 | 278,40 |
| Fructose | 55,00 | 130,40 |
| Saccharose | 954,60 | 803,00 |
| Raffinose | 208,70 | 220,20 |
| Stachyose | 160,00 | 135,50 |
| Maltose | 218,70 | 2120,20 |
| TOTAL | 1688,40 | 3687,70 |

Le grain dépelliculé contient donc une proportion accrue de maltose, qui est un sucre naturel, extrèmement intéressant pour ses aspects énergétiques et nutritionnels. Dans le cadre de cette invention, l'apparition du maltose peut atteindre jusqu'à 2% de la valeur pondérale de l'amidon du grain. La quantité relative des autres sucres n'est pas ou peu modifiée. Ainsi, selon un mode de réalisation avantageux de la présente invention, celle-ci se rapporte aux grains de blé dépelliculés contenant au moins 0,5 %, de préférence au moins 1 % et plus préférentiellement au moins 1,5 % en masse de maltose par rapport à la masse des grains dépelliculés.

### Exemple(s) de réalisation

A titre d'exemple la demanderesse fournit les résultats suivants obtenus sur le blé tendre ainsi que sur le blé dur.

### Exemple 1

Dans un réacteur à recirculation interne, on a introduit une masse de 8,28 kg de blé tendre destiné à la production de farine pour panification. Il s'agit d'un mélange constitué essentiellement des variétés Apache et Caphorn, le mélange ayant été réalisé par la minoterie Paulic à Saint Gérard (22). Ces 8,28 kg de blé tendre ont été soumis à un traitement à l'ozone dans les conditions suivantes:

La concentration de l'ozone dans son gaz vecteur était de 88 g / m³ TPN.

Le taux de traitement en ozone des grains de blé était de 5 g d'O₃ par kg de blé sec. Les 41,4 g d'ozone introduit (pour 8,28 kg de blé) ont été introduits entièrement sous forme d'ozone contenu dans le gaz vecteur.

Le taux d'humidité naturel des blés était de 13 %.

Le taux d'eau ajoutée à l'intérieur du réacteur a été de 4% massique.

Le taux d'humidité global du blé en début de traitement était de 17 %.

La durée du traitement a été de 30 minutes.
A l'issue de ce traitement, le réacteur a été vidangé et les pellicules séparées de la masse de grains traités par passage sur un tarare avec adjonction d'un flux d'air.
Dans ces conditions opératoires, les résultats suivants ont été obtenus:

| | |
|---|---|
| Masse de grains avant dépelliculage | : 8,28 kg |
| Masse de pellicules | : 0,20 kg |
| % de Pellicules | : 2,42 % |
| Masse de grains après dépelliculage | : 8,08 kg |

### Exemple 2

Dans un réacteur à recirculation interne, on a introduit une masse de 10 kg de blé dur destiné à la production de pâtes alimentaires. Il s'agit d'un mélange fourni par la coopérative Agralis et destiné à la semoulerie. Ces 10 kg de blé dur ont été soumis à un traitement à l'ozone dans les conditions suivantes:

La concentration de l'ozone dans son gaz vecteur était de 89 g / m³ TPN.

Le taux de traitement en ozone des grains de blé était de 5 g d'O₃ par kg de blé sec. Les 50 g d'ozone introduit (pour 10 kg de blé) ont été introduits entièrement sous forme d'ozone contenu dans le gaz vecteur.

Le taux d'humidité naturel des blés était de 12,41 %.

Le taux d'eau ajoutée à l'intérieur du réacteur a été de 5,5 % massique.

Le taux d'humidité global du blé en début de traitement était de 17%.

La durée du traitement a été de 30 minutes.
A l'issue de ce traitement, le réacteur a été vidangé et les pellicules séparées de la masse de grain traité par passage sur un tarare avec adjonction d'un flux d'air.
Dans ces conditions opératoires, les résultats suivants ont été obtenus:

| | |
|---|---|
| Masse de grains avant dépelliculage | : 10 kg |
| Masse de pellicules | : 0,29 kg |
| % de Pellicules | : 2,9 % |
| Masse de grains après dépelliculage | : 9,71 kg |

## Revendications

1. Procédé de dépelliculage de grains de blé comprenant les étapes suivantes :
a) le nettoyage des grains de blé brut ;
b) l'humidification des grains de blé ainsi nettoyés ;
c) la mise en contact des grains de blé, postérieurement à leur humidification à l'étape (b) ou en même temps que celle-ci, avec de l'ozone ;
d) la séparation des pellicules des grains de la masse de grains partiellement ou totalement dépelliculés à l'étape (c), lesdites péllicules qui sont séparées lors du traitement par l'ozone étant extraites de la masse des grains par un flux d'air permettant un tri densimétrique,
la séparation densimétrique des grains étant effectuée par application simultanée d'une vibration horizontale générée à l'aide d'un plateau-tamis vibrant et d'un flux d'air ascendant à travers ledit plateau-tamis vibrant.

2. Procédé selon la revendication 1 selon lequel la quantité d'ozone utilisée est comprise entre 0,5 et 20 exprimée en grammes d'ozone par kilo de grains.

3. Procédé selon les revendications 1 ou 2, **caractérisé en ce que** la durée de mise en contact des grains avec l'ozone est comprise entre 5 et 70 min, et de préférence entre 15 et 40 min.

4. Procédé selon l'une quelconque des revendications 1 à 3, **caractérisé en ce que** l'ozone utilisé est produit à partir d'un gaz vecteur sec et **en ce que** la concentration de l'ozone dans le gaz vecteur est comprise entre 80 et 160 g/m³ TPN et de préférence entre 100 et 120 g/m³ TPN.

5. Procédé selon l'une quelconque des revendications 1 à 4, **caractérisé en ce que** la pression du gaz vecteur ozoné lors de la mise en contact avec les grains est comprise entre 200 et 500 mbar.

6. Procédé selon l'une des revendications 1 à 5, **caractérisé en ce que** l'eau servant à l'humidification des grains est préalablement traitée par de l'ozone.

7. Procédé selon l'une des revendications 1 à 6, **caractérisé en ce que** la mise en contact des grains avec l'ozone est réalisée de façon continue ou de façon discontinue dans un réacteur de mise en contact vertical comportant un dispositif de recirculation interne des grains.

8. Installation pour la mise en oeuvre du procédé de dépelliculage de grains de blé selon l'une des revendications 1 à 7, comportant :
a) des moyens (5) de nettoyage desdits grains de blé ;
b) des moyens d'humidification desdits grains de blé ;
c) un générateur d'ozone (16) ;
d) un réacteur d'ozonation (7) lié au générateur d'ozone (16) et permettant la mise en contact desdits grains de blé avec de l'ozone produit par le générateur d'ozone (16), l'ozone produit étant contenu dans un gaz vecteur et/ou avec de l'eau ozonée ; et
e) un dispositif (10) permettant la séparation des pellicules des grains de blés traités à l'ozone, ledit dispositif de séparation (10) utilisant un flux d'air pour séparer les grains de blés des pellicules en fonction des différences de masse ou de masse volumique, ledit dispositif de séparation étant un dispositif à tables tamis vibrantes auxquelles on adjoint un flux d'air perpendiculaire aux tables tamis vibrantes.

9. Installation selon la revendication 8, **caractérisée en ce que** les moyens d'humidification b) comprennent une arrivée d'eau ozonée (20) dans le réacteur d'ozonation (7), ledit réacteur d'ozonation (7) comportant également une arrivée (23) d'ozone gazeux contenu dans un gaz vecteur.

## Patentansprüche

1. Verfahren zum Schälen von Weizenkörnern, umfassend die folgenden Schritte:
a) das Reinigen der Rohweizenkörner;
b) das Befeuchten der so gereinigten Weizenkörner;
c) das Inkontaktbringen der Weizenkörner, nach ihrer Befeuchtung in Schritt (b) oder gleichzeitig dazu, mit Ozon;
d) das Separieren der Schalen der Körner der Kornmasse,
die in Schritt (c) teilweise oder vollständig geschält wurden,
wobei die Schalen, die bei der Behandlung mit Ozon separiert werden, aus der Masse der Körner mit einem Luftstrom ausgefördert werden, der eine densimetrische Sortierung ermöglicht, wobei die densimetrische Separierung der Körner durch gleichzeitiges Anwenden einer horizontalen Schwingung, die mithilfe einer Schwingsiebplatte erzeugt wird, und eines durch die Schwingsiebplatte hindurch aufsteigenden Luftstroms erfolgt.

2. Verfahren nach Anspruch 1, wobei die verwendete Ozonmenge zwischen 0,5 und 20 beträgt, ausgedrückt in Gramm Ozon je Kilo Körner.

3. Verfahren nach Anspruch 1 oder 2, **dadurch gekennzeichnet, dass** die Dauer des Inkontaktbringens der Körner mit dem Ozon zwischen 5 und 70 min und bevorzugt zwischen 15 und 40 min beträgt.

4. Verfahren nach einem der Ansprüche 1 bis 3, **dadurch gekennzeichnet, dass** das verwendete Ozon ausgehend von einem trockenen Trägergas produziert wird und dass die Konzentration des Ozons in dem Trägergas zwischen 80 und 160 g/m³ TPN und bevorzugt zwischen 100 und 120 g/m³ TPN beträgt.

5. Verfahren nach einem der Ansprüche 1 bis 4, **dadurch gekennzeichnet, dass** der Druck des ozonhaltigen Trägergases beim Inkontaktbringen mit den Körnern zwischen 200 und 500 mbar beträgt.

6. Verfahren nach einem der Ansprüche 1 bis 5, **dadurch gekennzeichnet, dass** das zum Befeuchten der Körner dienende Wasser zuvor mit Ozon behandelt wird.

7. Verfahren nach einem der Ansprüche 1 bis 6, **dadurch gekennzeichnet, dass** das Inkontaktbringen der Körner mit dem Ozon kontinuierlich oder diskontinuierlich in einem vertikalen Reaktor zum Inkontaktbringen ausgeführt wird, der eine interne Vorrichtung zur Umwälzung der Körner umfasst.

8. Anlage zur Durchführung des Verfahrens zum Schälen von Weizenkörnern nach einem der Ansprüche 1 bis 7, umfassend:
a) Mittel (5) zum Reinigen der Weizenkörner;
b) Mittel zum Befeuchten der Weizenkörner;
c) einen Ozongenerator (16);
d) einen Ozonisierungsreaktor (7), der mit dem Ozongenerator (16) verbunden ist und das Inkontaktbringen der Weizenkörner mit dem vom Ozongenerator (16) erzeugten Ozon, wobei das erzeugte Ozon in einem Trägergas enthalten ist, und/oder mit ozonhaltigem Wasser ermöglicht, und
e) eine Vorrichtung (10), die das Separieren der Schalen der mit dem Ozon behandelten Weizenkörner ermöglicht,
wobei die Separierungsvorrichtung (10) einen Luftstrom zum Separieren der Weizenkörner von den Schalen in Abhängigkeit von den Masse- oder Dichteunterschieden verwendet, wobei die Separierungsvorrichtung eine Vorrichtung mit Schwingsiebtischen ist, denen ein senkrecht zu den Schwingsiebtischen verlaufender Luftstrom zugeordnet ist.

9. Anlage nach Anspruch 8, **dadurch gekennzeichnet, dass** die Befeuchtungsmittel b) einen Zulauf für ozonhaltiges Wasser (20) in den Ozonisierungsreaktor (7) umfassen, wobei der Ozonisierungsreaktor (7) auch einen Zulauf (23) für gasförmiges Ozon, das in einem Trägergas enthalten ist, umfasst.

## Claims

1. Process to skin wheat grains comprising the following steps:
a) cleaning the raw wheat grains;
b) moistening the cleaned wheat grains;
c) contacting the wheat grains with ozone, after or at the same time as their moistening at step b);
d) separating the detached outer skin layers from the mass of grains that is partly or wholly skinned at step c),
the skin layers which are separated during ozone treatment being extracted from the mass of grains by an airflow allowing densimetric sorting, the densimetric separation of the grains being conducted by simultaneous application of horizontal vibration, generated by a vibrating screen, and a rising airflow through said vibrating screen.

2. Process according to claim 1, wherein the quantity of ozone used lies between 0.5 and 20 expressed in grams of ozone per kilo of grains.

3. Process according to claim 1 or 2, wherein the contacting time of the grains with the ozone lies between 5 and 70 min, preferably between 15 and 40 min.

4. Process according to one of claim 1 to 3, wherein the ozone used is produced from a dry carrier gas and in that the concentration of ozone in the carrier gas lies between 80 and 160 g/m³ NTP and preferably between 100 and 120 g/m³ NTP.

5. Process according one of claim 1 to 4, wherein the pressure of the ozonated carrier gas when contacted with the grains lies between 200 and 800 mbar.

6. Process according to claim 1, wherein the water used to moisten the grains is previously treated with ozone.

7. Process according to one of claim 1 to 5, wherein the contacting of the grains with the ozone is conducted continuously or discontinuously in a vertical contacting reactor comprising an internal device to re-circulate the grains.

8. Installation to implement the wheat grain skinning method according to anyone of claim 1 to 7, comprising:
a) means (5) to clean said wheat grains;
b) means to moisten said wheat grains;
c) an ozone generator (16) ;
d) an ozonation reactor (7) linked to the ozone generator (16), allowing the contacting of the said wheat grains with the ozone contained in a carrier gas and/or with ozonated water; and
e) a separation device (10) enabling the separation of the detached outer skin fragments from the ozone-treated wheat grains,
said separation device (10) using an airflow to separate the wheat grains from the outer skin fragments in relation to weight differences or density differences, said separation device being a vibrating screen device to which an airflow has been added perpendicular to the vibrating screens.

9. Installation according to claim 8, wherein the moistening means b) comprise an inlet for ozonated water (20) in the ozonation reactor (7), said ozonation reactor (7) also comprising also comprising an inlet (23) for gaseous ozone contained in a carrier gas.
